# EUROPÄISCHE PATENTSCHRIFT

(11) **EP 2 871 431 B1**
(45) Veröffentlichungstag und Bekanntmachung des Hinweises auf die Patenterteilung: **03.02.2016**
(21) Anmeldenummer: 13191885.6
(22) Anmeldetag: 07.11.2013
(51) Int. Cl.: F27B 17/02, F27D 19/00, F27D 21/00, G01N 27/12, G01N 27/22

(54) **Dentalofen mit Steuervorrichtung zur Feuchtebestimmung des Ofeninnenraums**
Method for determining humidity using the dielectric effect in a dental oven
Procédé de détermination de l'humidité dans un four dentaire au moyen d'un effet diélectrique

(43) Veröffentlichungstag der Anmeldung: 13.05.2015
(73) Patentinhaber: Ivoclar Vivadent AG, 9494 Schaan (LI)
(72) Erfinder: Pauler, Markus, 6800 Feldkirch (AT); Jussel, Rudolf, 6805 Feldkirch-Gisingen (AT)
(74) Vertreter: Baronetzky, Klaus

(56) Entgegenhaltungen:
- EP-A1- 2 550 928
- DE-A1- 19 753 837
- GB-A- 332 194

## Beschreibung

Die Erfindung betrifft einen Dentalofen, gemäß dem Oberbegriff von Anspruch 1.

Dentalöfen werden eingesetzt, um Dentalrestaurationsteile nach einer vorgeschriebenen Brennkurve oder Presskurve zu sintern. Neben der genauen Einhaltung der betreffenden Kurve sind auch die Ausgangsparameter des Dentalrestaurationsteils für das Ergebnis des Brennens bzw. Pressens ausschlaggebend. Hierzu gehört beispielsweise die Ausgangstemperatur des ungesinterten Dentalrestaurationsteils, aber auch Ofenparameter wie die Feuchtigkeit oder der Ausgangsdruck des Dentalofens.

Dentalrestaurationsteile sondern Feuchtigkeit ab, die sich an kalten Stellen des Dentalofens gerne niederschlägt. Typischerweise weist ein Dentalofen eine zentrale Brennkammer auf, die von einem Heizelement, meist in Form einer Heizspirale, umgeben ist. Um die Heizspirale herum erstreckt sich ein Wärmedämmkörper des Dentalofens, der aus Schamott oder einem beliebigen anderen geeigneten Material bestehen kann. Beispielsweise können auch einzelne Dämmteile zusammengefasst den Wärmedämmkörper bilden.

Auch oberhalb und unterhalb des Brennraums erstreckt sich der Wärmedämmkörper, um eine gleichmäßige Erwärmung der Brennkammer mit einem innerhalb der Brennkammer geringen Temperaturgradienten bereitzustellen.

Innerhalb des Wärmedämmkörpers besteht während des Brennvorgangs eine Temperaturverlauf, wobei je nach Wärmewiderstand des Wärmedämmkörpers außen, also am Gehäuse des Dentalofens, eine höhere oder niedrigere Temperatur besteht.

Wenn beispielsweise ein Dentalofen verwendet wird, der für das Brennen von Zirkondioxid bestimmt ist, sind in der Brennkammer Temperaturen von über 1.600 °C erforderlich, so dass das Gehäuse sich durchaus auf 60 °C oder mehr erwärmen kann. Während des Aufheizvorgangs des kalten Dentalofens ist jedoch das Gehäuse typischerweise auf Raumtemperatur, also beispielsweise etwa auf 20 °C.

Der in dem Wärmedämmkörper bestehende Temperaturgradient führt jedenfalls dazu, dass in der Nähe des Gehäuses die Neigung der im Dentalofen bestehenden Feuchtigkeit zu kondensieren am größten ist.

Um diese Feuchtigkeit zu beseitigen, sind verschiedene Verfahren verwendet worden. Beispielsweise ist es aus der GB 322 194 bekannt, das Dentalrestaurationsteil auf Temperaturen zwischen 370 °C und 480 °C aufzuheizen. Es wird ein kalter Spiegel in die Nähe gehalten, um festzustellen, zu welchem Zeitpunkt kein Dampf mehr aus dem Dentalrestaurationsteil aufsteigt. Das Ergebnis dieser visuellen Überprüfung wird verwendet, um zu gewährleisten, dass lediglich ein trockenes Dentalrestaurationsteil tatsächlich gebrannt wird. Die EP 2 550 928 A1 beschreibt einen Dentalofen mit Trocknungssensor.

Eine derartige Lösung hängt jedoch sehr von der fachmännischen Erfahrung des beauftragten Zahntechnikers ab, und ist zudem gegebenenfalls zeitaufwändig.

Gemäß alternativen Lösungen, die in neuerer Zeit vorgeschlagen sind, wird ein Temperatursensor eingesetzt, über den beim Erreichen einer bestimmten Temperatur der eigentliche Brennvorgang gestartet wird.

Hierbei wird von der Überlegung ausgegangen, dass die Verdampfungswärme beim Aufheizen des Dentalofens ein Temperaturplateau erzeugt, das für die Steuerung ausgenutzt werden soll.

Bekanntlich hängt jedoch der Siedepunkt einer Flüssigkeit stark von dem bestehenden Druck ab. Außerdem hatte sich gezeigt, dass bei einem Dentalofen in manchen Fällen ein fehlerhafter Brennvorgang oder Pressvorgang stattfindet, obwohl die ermittelten Signale des Temperatursensors hierauf nicht hindeuten.

Daher liegt der Erfindung die Aufgabe zu Grunde, einen Dentalbrennofen gemäß dem Oberbegriff von Anspruch 1 zu schaffen, der mögliche bestehende Fehlerquellen beim Brennen oder Pressen eines Dentalrestaurationsteils mit besserer Zuverlässigkeit ausschaltet.

Diese Aufgabe wird erfindungsgemäß durch Ansprüche 1 und 13 gelöst. Vorteilhafte Weiterbildungen ergeben sich aus den Unteransprüchen.

Erfindungsgemäß ist es besonders günstig, dass ohnehin vorhandene Bauteile, nämlich das Gehäuse des Dentalofens, das Heizelement des Dentalofens und der Wärmedämmkörper des Dentalofens, für die erfindungsgemäße Feuchtebestimmung eingesetzt werden können. Insofern sind keine Zusatzinvestitionen hinsichtlich weiterer separater Bauteile oder Sensoren erforderlich, und die Bereitstellung der erfindungsgemäßen Messschaltung kann mit einfachsten Mitteln erfolgen, wie sich auch aus der nachstehenden Figurenbeschreibung ergibt.

Erfindungsgemäß lässt sich besonderes günstig die Tatsache ausnutzen, dass die Dielektrizitätskonstante des Wärmedämmkörpers sich in Abhängigkeit von der in diesem enthaltenen Feuchtigkeit stark ändert. Die Dielektrizitätskonstante von Wasser unterscheidet sich von derjenigen beispielsweise von Siliziumdioxid um eineinhalb Zehnerpotenzen.

Typischerweise weist Schamotte zwischen 90 % und 60 % Siliziumdioxid auf, und auch der Aluminiumoxid-Anteil der Schamotte hat eine Dielektrizitätskonstante, die um nahezu einer Zehnerpotenz geringer als diejenige von Wasser ist.

Erfindungsgemäß ist es vorgesehen, die Kapazität des Wärmedämmkörpers an einer signifikanten Stelle zu messen, und über die gemessene Kapazität Rückschlüsse über die Feuchtigkeit zu ziehen. Hierzu wird eine Stelle ausgewählt, an der die Wahrscheinlichkeit, dass Feuchtigkeit kondensiert, vergleichsweise hoch ist, beispielsweise eine Stelle in der Nähe des Gehäuses.

Andererseits wirkt aber auch Wasserdampf, der sich zwischen den Elektroden des erfindungsgemäßen Kondensators befindet, kapazitätserhöhend, so dass es auch möglich ist, die gesamte Dicke des Wärmedämmkörpers zwischen dem Heizelement und dem Gehäuse des Dentalofens als Kondensator zu verwenden. Zudem wirken sich bereichsweise Dielektrizitätskonstanten-Erhöhungen auf das Ergebnis der Kapazitätsmessung signifikant aus.

Auch wenn es erfindungsgemäß bevorzugt ist, auf bauliche Änderungen zu verzichten, und damit bereits vorhandene Bauteile des Dentalofens als Elektroden zu verwenden, und mindestens einen Teil des Wärmedämmkörpers als Dielektrikum zu verwenden, versteht es sich, dass anstelle dessen auch eine Realisierung eines separaten Messkondensators, beispielsweise im Wärmedämmkörper, möglich ist.

Es ist auch möglich, den Temperatursensor, der metallisch ist und überwiegend in dem Wärmedämmkörper eingebettet ist, als eine Elektrode zu verwenden, und das Heizelement als eine weitere Elektrode.

Hierbei lässt sich auch die Tatsache besonders günstig ausnutzen, dass das Heizelement sehr oft über ein Trennrelais mit der Stromversorgung des Dentalbrennofens verbunden ist. Mindestens eine Schaltstellung des Trennrelais erlaubt es daher, eine kapazitive Prüfung unbeeinflusst von der Stromversorgung des Dentalbrennofens vorzunehmen.

Nachdem das Trennrelais aus sicherheitstechnischen Überlegungen oft vorhanden ist, entstehen insofern keine zusätzlichen Kosten für die Realisierung eines erfindungsgemäßen Dentalofens.

Die erfindungsgemäße Kapazitätsmessung ist jedenfalls in günstiger Weise als Differenztialmessung ausgelegt. Es wird demnach nicht die absolute Kapazität des Wärmedämmkörpers bzw. des mit dem Wärmedämmkörper als Dielektrikum ausgebildeten Kondensators erfasst, sondern die Änderung der Kapazität. Erfindungsgemäß eignet sich hierzu besonders die Einbindung dieser Kapazität in einem Brückenzweig einer Brückenschaltung. Die Auslegung ist dann so bemessen, dass die Brücke dann messbar aus dem Gleichgewicht gerät, wenn eine Feuchtigkeitszunahme oberhalb eines vorgegebenenn Schwellwerts zur Kapazitätserhöhung führt.

In einem Referenzzweig der Brückenschaltung kann dann ein gleichartiger, jedoch feuchtigkeitsgeschützter Teil des Wärmedämmkörpers erfasst werden. Hierdurch lassen sich Temperatur- und Druckschwankungen sowie andere äußere Einflüsse, die die Kapazitätsänderung beeinflussen könnten, automatisch kompensieren, so dass sie das Messergebnis nicht verfälschen.

Erfindungsgemäß wird mit der Feuchtigkeitsmessung auch gleichzeitig verhindert, dass mit einem zu geringen Unterdruck gearbeitet wird, so dass dann Eintrübungen in der Dentalrestauration zu befürchten sind oder eine Fehlermeldung mit Hinweis auf zu geringen Unterdruck den Prozess unterbricht. Wenn durch Vorhandensein von Feuchtigkeit in der Brennkammer ein entsprechender Dampfdruck der Feuchtigkeit den Prozess beinflussen könnte, wird dies vorab erfindungsgemäß über die erfindungsgemäße Erfindung erfasst.

Erfindungsgemäß ist es vorgesehen, dass die Steuervorrichtung automatisch die erwünschte Überprüfung der Feuchtigkeit des Brennofens mit der erfindungsgemäßen Ausgestaltung vornimmt.

Hierzu wird zunächst mittels des Trennrelais das Heizelement vom Netz und von den Steuertransistoren für den Betrieb des Heizelements zur Aufheizung des Dentalofens getrennt. Hier ist es günstig, dass Heizelemente eine rein ohmsche Last darstellen

Bevorzugt erfolgt die Trennung zweiphasig, und das Trennrelais ist zugleich ein Umschalter, der Heizelement als Elektrode eines Kondensators verschaltet. Die andere Elektrode des Kondensators ist dann ein metallisches Element im oder am Wärmedämmkörper, beispielsweise das Gehäuse. Der Kondensator, der aus diesem metallischen Element, dem der Wärmedämmköper oder einem Teil des selben als Dielektrikum und dem Heizelement als zweite Elektrode besteht, wird nun mit einer sich ändernden Spannung beaufschlagt. Der bei der Änderung fließende Strom wird erfasst, und der betreffende Messwert wird als Ausgangssignal der Messschaltung der Steuervorrichtung zugeleitet.

Die Steuervorrichtung ermittelt dann, ob die Kapazität oberhalb eines vorgegebenen Schwellwerts lag, der der zulässigen Feuchtigkeit im Ofeninneren entspricht.

Bejahendenfalls wird ein Entfeuchtungsprogramm eingeleitet, während im Normalfall, also, wenn die Kapazität gering genug ist, der Normalbetrieb des Dentalofens durchgeführt bzw. fortgesetzt wird.

Der betreffende Test kann entweder bei Raumtemperatur des Ofens vorgenommen werden, oder aber auch bei einer erhöhten Temperatur, beispielsweise bei einer Temperatur von 500 °C, wenn der Dentalofen bereits vorgewärmt ist.

Die sich ändernde Spannung kann auch als Hochfrequenz-Spannung ausgebildet sein, so dass die Kapazität des Kondensators als Wechselstrom-Widerstand in der Messschaltung ausgewertet wird.

Der Kondensator kann insofern als Teil eines RC-Glieds verschaltet sein, in einer Wheatstonebrücke, oder auch in einem Schwingkreis, der aus dem Kondensator und einer Induktivität besteht, wobei die Kapazitätserhöhung zur Reduktion der Eigenfrequenz des Schwingkreises führt. In allen Fällen kann die Änderung des Ausgangssignals der Messschaltung ausgewertet und durch die Steuervorrichtung in geeigneter Weise verarbeitet werden.

Es ist auch möglich, zwischen dem Heizelement und der anderen Elektrode eine recht hohe Spannung anzulegen - nach Trennung des Heizelements vom Stromkreis im Übrigen über das Trennrelais - und dann den fließenden Strom zu ermitteln. Während der Wärmedämmkörper im trockenen Zustand ein guter elektrische Isolator ist, vermag Feuchtigkeit, die in dem Wärmedämmkörper vorliegt, den spezifischen Widerstand des Wärmedämmkörpers deutlich abzusenken. Während im trockenen Zustand ein Gesamtwiderstand von beispielsweise 100 MOhm oder 1 GOhm gemessen wird, sinkt der elektrische Widerstand des Wärmedämmkörpers in radialer Richtung betrachtet, also zwischen dem Gehäuse und dem Heizelement, auf einen Wert von beispielsweise 10 MOhm oder 100 MOhm.

Typischerweise besteht in dem Wärmedämmkörper ein Feuchtigkeitsgradient, mit einem recht hohen Anteil an kondensierter Feuchtigkeit im Bereich des Gehäuses und einem recht geringen Feuchtigkeitsanteil im Bereich des Heizelements.

Bevorzugt wird daher ein Gehäusenahbereich des Wärmedämmkörpers erfindungsgemäß ausgewertet. Dies kann beispielsweise durch eine zusätzliche Elektrode erfolgen, die dort eingesetzt ist und zwischen der und dem Gehäuse sich ein Teil des Wärmedämmkörpers befindet.

Es besteht auch die Möglichkeit, einen ohnehin vorhandenen Temperatursensor recht nahe an dem Heizelement anzuordnen, so dass sich der Temperatursensor, der häufig als Thermoelement ausgebildet ist, parallel zum Heizelement erstreckt. Durch einen recht geringen Abstand zwischen dem metallischen Temperatursensor und dem Heizelement lässt sich die Kapazität des zwischen diesen dann gebildeten Kondensators erhöhen, was der Signifikanz der Messergebnisse zu Gute kommt.

Während in der zuvor beschriebenen Ausgestaltung das Dielektrikum des Messkondensators aus Schamott, also im Wesentlichen aus SiO₂ mit einer Beimengung von Al₂O₃ besteht, ist es auch möglich, anstelle dessen einen speziellen Kondensator mit einem Dielektrikum auszubilden, das porös ist, aber eine sehr geringe Dielektrizitätskonstante aufweist. Eindringender Wasserdampf würde dann die Dielektrizitätskonstante dieses Mediums noch stärker erhöhen, also beispielsweise um nahezu zwei Zehnerpotenzen. Beispielsweise hat Luft eine Dielektrizitätskonstante von etwa 1, während Wasser eine Dielektrizitätskonstante von etwa 80 hat, was einen Unterscheid von nahezu zwei Zehnerpotenzen ergibt.

Die Verwendung von SiO₂ als Medium für den Kondensator ist jedoch vor dem Hintergrund der Überlegung bevorzugt, dass sich dann ein gewisser "Memory-Effekt" einstellt:
Eindringende Feuchtigkeit lagert sich gerne in den Poren der Schamottkeramik ab, die auf Grund ihrer hohen Pororsität hygroskopisch wirkt. Sie verbleibt auch dort, wenn der Ofen geöffnet und belüftet wird, und würde beim nächsten Brennzyklus schädlich wirken, wenn sie nicht entfernt wird.

Weitere Vorteile, Einzelheiten und Merkmale ergeben sich aus den nachfolgenden Beschreibungen mehrerer Ausführungsbeispiele anhand der Zeichnungen.

Es zeigen:
- Fig. 1: einen schematisch dargestellten Dentalofen im Schnitt in einer Ausführungsform;
- Fig. 2: ein Querschnitt durch den Ofen gemäß Fig. 1;
- Fig. 3: ein schematisches Schaltbild zusammen mit einer Lade- und Entladekurve für eine Messschaltung in einem erfindungsgemäßen Dentalofen;
- Fig. 4: eine modifizierte Messschaltung in einem erfindungsgemäßen Dentalofen;
- Fig. 5: eine weitere modifizierte Messschaltung in einem erfindungsgemäßen Dentalofen; und
- Fig. 6: eine modifizierte schematische Darstellung von weiteren Messmöglichkeiten in einem erfindungsgemäßen Dentalofen.

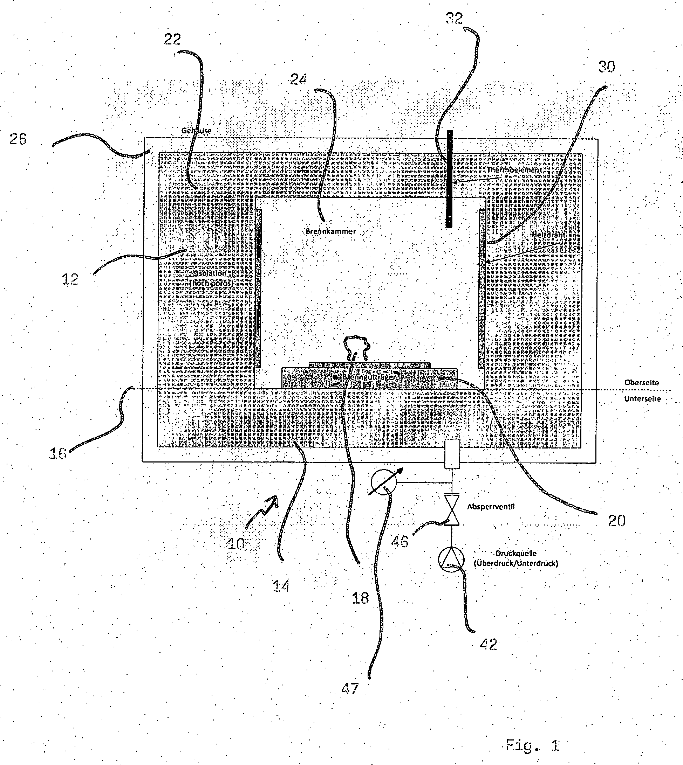

Der in Fig. 1 dargestellt Dentalofen 10 weist eine Ofenhaube 12 und ein Ofenunterteil 14 auf, die in an sich bekannter Weise entlang einer Trennlinie 16 voneinander trennbar sind. Vorteilhaft ist es, wenn die Ofenhaube 12 kombiniert nach oben angehoben und weggeschwenkt werden kann, da dann der Ofenunterteil 14 erschütterungsfrei an Ort und Stelle verbleiben kann, so dass es zu keinen Schädigungen von Dentalrestaurationsteilen 16 kommt, die auf einem Brenngutträger 20 abgelegt sind.

Sowohl das Ofenunterteil 14 als auch die Ofenhaube 16 sind mit einem Wärmedämmkörper 22 versehen. Dieser besteht in an sich bekannter Weise aus Schamott, AluminiumSilikat-Faser (ASW), Alcaline-Earth-Silicate-Wool (AES), polycristalline Wolle (PCW), Feuerleichtstein oder einer Kombination aus diesen Materialien und dient der großvolumigen Wärmedämmung zwischen einer Brennkammer 24 und einem Gehäuse 26 des Dentalofens 10, das diesen umgibt.

Die Brennkammer 24 umgebend ist an der Innenseite des Wärmedämmkörpers 22 ein Heizelement 30 angebracht, das die Brennkammer 24 aufzuheizen vermag. Die Temperatur im Inneren der Brennkammer lässt sich über einen Temperatursensor 32 erfassen.

Die Ofenhaube 12 ist gegen das Ofenunterteil 14 hermetisch abgeriegelt, wobei die Dichtung im Bereich des Gehäuses 26 erfolgt. Es ist ein Anschluss 40 für eine Unterdruckquelle 42 vorgesehen, welcher Anschluss das Gehäuse 26 durchtritt. Über einen Druckmesser 47 lässt sich der Innendruck in dem Ofen 10 erfassen. Der Wärmedämmkörper 22 ist offenporig ausgebildet, so dass in dem Ofen ein nahezu gleicher Innendruck besteht.

Die Druckquelle 42 ist zudem über ein Absperrventil 46 absperrbar; sie kann sowohl Unterdruck als auch Überdruck bereitstellen, wenn beispielsweise Schutz- oder Spülgas zugeführt wird.

Im Betrieb wird nun in an sich bekannter Weise das Dentalrestaurationsteil 16 nach Einstellung des gewünschten Drucks über die Druckquelle 42 über das Heizelement 30 erwärmt und nach einer vorgegebenen Brennkurve gebrannt.

Hierbei wird sowohl der Druck über den Druckmesser 47 als auch die Temperatur über den Temperatursensor 32 überwacht, und über die nicht dargestellte Steuervorrichtung wird die Brennkurve für das Dentalrestaurationsteil 16 in der erwünschten Weise abgefahren.

Erfindungsgemäß ist es vorgesehen, dass insbesondere während das Heizelement 30 vom Netz getrennt ist, über das Heizelement 30 als eine Elektrode die Feuchtigkeit im Inneren des Wärmedämmkörpers 22 gemessen wird.

Hierzu wird die Verschaltung so gewählt, dass das Gehäuse 26 als eine Elektrode 50 und das Heizelement 30 als zweite Elektrode 52 eines Messkondensators 54 eingesetzt wird. Der Wärmedämmkörper 22 bildet dann das Dielektrikum 58 des Kondensators 54. Die Dielektrizitätskonstanze dieses Kondensators 54 ändert sich in Abhängigkeit von dem Wassergehalt des Wärmedämmkörpers 22. Dieser Einfluss wird ausgenutzt, um die Feuchtigkeit im Inneren des Wärmedämmkörpers 22 zu bestimmen.

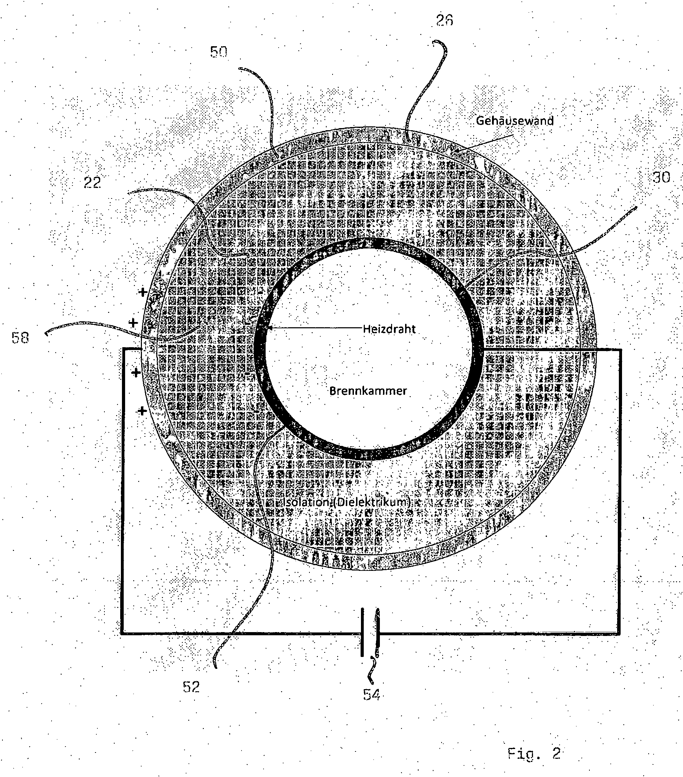

Es versteht sich, dass der in Fig. 2 dargestellte Messkondensator 54 lediglich symbolisch zu verstehen ist und gleichsam eine Ersatzschaltung für den Kondensator darstellt, der aus dem Dielektrikum, dem Heizelement 30 und der Gehäusewand 26 gebildet ist. Der Kapazitätswert dieses Messkondensators lässt sich mittels einer Gleichspannungs-Messschaltung, aber auch bei Bedarf mittels einer Wechselspannungs-Messschaltung ermitteln.

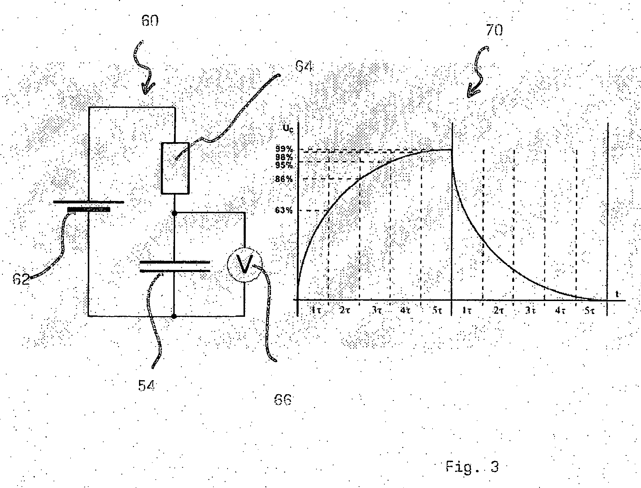

Eine mögliche Messschaltung 60 für den Wärmedämmkörper 22 ist aus Fig. 3 ersichtlich. Bei dieser schematischen Messschaltung 60 ist eine Gleichspannungsquelle 62 eingesetzt, die über einen Widerstand 64 den Messkondensator 54 auflädt. Ein Spannungsmesser 66 erfasst die anliegende Spannung an dem Messkondensator 54.

Bei einer größeren Kapazität des Messkondensators 54 - die einer höheren Dielektrizitätskonstante seines Dielektrikums entspricht - lädt sich der Kondensator 54 langsamer auf, so dass sie sich die in Fig. 3 rechts dargestellte Spannungskurve 70 weiter nach rechts verschiebt, und entlädt sich ebenso langsamer.

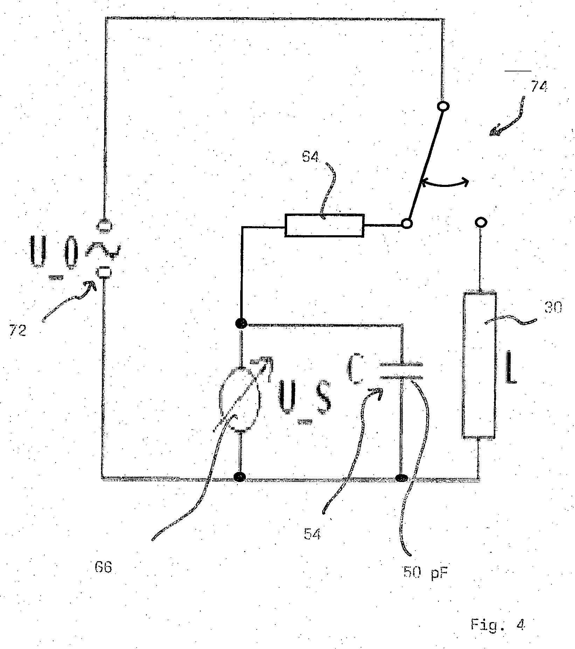

Eine derartige theoretisch mögliche Schaltung wird in der Praxis zweckmäßig durch eine modifizierte Schaltung ersetzt, wie sie jedenfalls schematisch aus Fig. 4 ersichtlich ist.

Eine Wechselspannungsquelle 72 speist hier über ein Trennrelais 74 in dessen Messtellung und über den Widerstand 64 den Messkondensator 54. Während die Kapazität des Messkondensators 54 durch den geometrischen Aufbau und die verwendete Schamotte festliegt und bei einem trockenen Ofen um 50 pF beträgt, lässt sich durch die Wahl der Frequenz und Spannungshöhe der Wechselspannungsquelle 72 des Widerstands 64 ein günstiger und signifikanter Betrieb des Messkondensators 54 einstellen. Beispielsweise kann sich bei einem ausgesprochen feuchten Ofeninnenraum die Kapazität des Kondensators auf 80 pF erhöhen, was sich ohne weiteres über den Spannungsmesser 66 erfassen lässt.

In der Praxis ist hier der Spannungsmesser 66 durch den Ausgang der Messchaltung 60 ersetzt und mit der Steuervorrichtung verbunden.

Die in Fig. 4 dargestellte rein ohmsche Last L entspricht dem elektrischem Äquivalent des Heizelements 30, das über das Trennrelais mit einer nicht dargestellten Heizspannungsquelle verbindbar ist; insofern ist in Fig. 4 das Trennrelais 74 nur partiell dargestellt.

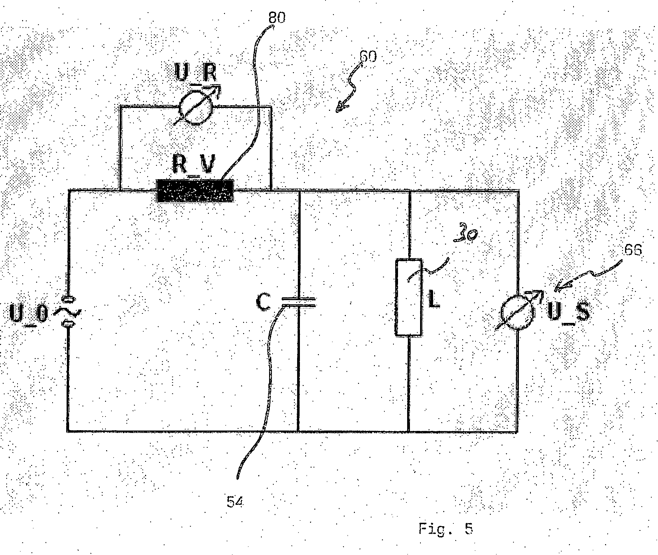

Eine modifizierte Messschaltung 60 lässt sich aus Fig. 5 entnehmen. Hier ist aus dem Messkondensator 54 und einer Spule 80 ein Schwingkreis gebildet, dessen Eigenfrequenz sich in Abhängigkeit von dem Kapazitätswert des Messkondensators 54 ändert. Auch hier lässt sich die betreffende Änderung einer elektrischen Größe in an sich bekannter Weise für die Erfassung der Dielektrizitätskonstante des Messkondensators 54 ausnutzen.

In weiterer bevorzugter Ausgestaltung ist es vorgesehen, den Dentalofen abzuschalten und die Kapazität des Wärmedämmkörpers 22 erfasst wird, beispielsweise durch Messen der Kapazität zwischen dem Heizelement 30 und dem Gehäuse 26, das typischerweise metallisch ausgebildet ist oder - wenn es aus Isoliermaterial bestehen sollte - von Innen metallisch bedampft sein kann.

Die so erfassten Messwerte erlauben die Bestimmung der Feuchtigkeit in einem Wärmedämmkörper 22 und damit im Innenraum des Ofens.

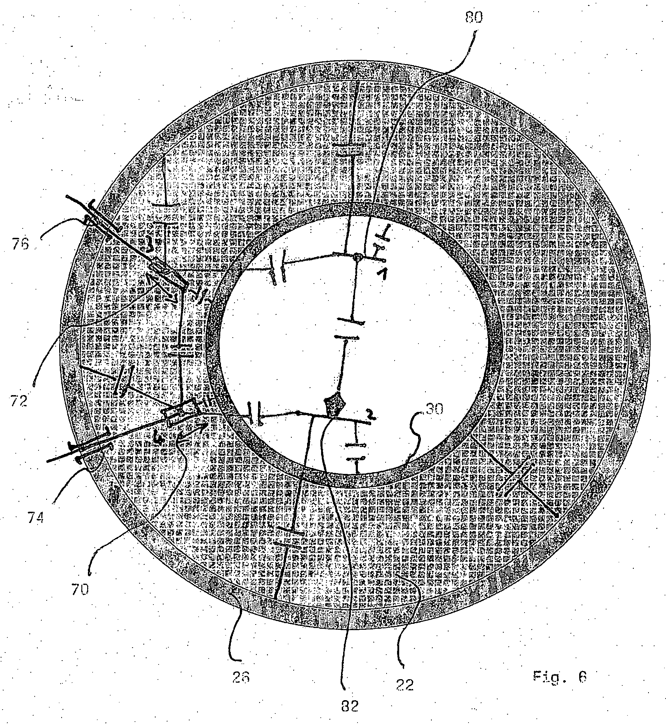

In weiterer vorteilhafter Ausgestaltung, die in Fig. 6 dargestellt ist, ist es vorgesehen, zwei zusätzliche Elektroden 70 und 72 im Innenraum des Dentalofens, nämlich im Wärmedämmkörper 22 anzuordnen. Die Elektroden durchtreten an Durchführungen 74 und 76 das Ofengehäuse 26, in an sich bekannter Weise isolierter Form. Sie sind schiebebeweglich geführt, so dass sich bei im Wesentlichen radialer Schiebeführung der Abstand zwischen ihnen ändern lässt, insbesondere aber auch der Abstand zum Heizelement 30.

Es besteht die Möglichkeit, die Kapazitäten zwischen den Elektroden 70 und 72, aber auch je einer Elektrode und dem Heizelement 30 oder aber zwischen der betreffenden Elektrode und dem Gehäuse 26 zu erfassen und die Messwerte zu kombinieren bzw. die optimiert signifikanten Unterschiede bei der Erfassung für die Auswertung heranzuziehen.

Zusätzlich oder alternativ können weitere Elektroden 80 und 82 im Brennraum des Ofens angeordnet sein, zwischen denen ebenfalls die Kapazität bestimmbar ist, wobei es zusätzlich auch möglich ist, die Kapazität zwischen den beiden betreffenden Elektroden, von denen mindestens eins auch ein Thermoelement sein kann, beispielsweise zu dem Heizelement 30 zu erfassen.

Auch hier ändert sich die Kapazität in Abhängigkeit vom Feuchtigkeitsgehalt des so gebildeten jeweiligen Dielektrikums.

Als schematische Kondensatoren sind in Fig. 6 zahlreiche weitere Kondensatoren eingezeichnet, zwischen denen je Änderungen der Kapazität erfassbar und auswertbar sind.

## Patentansprüche

1. Dentalofen, mit einem Heizelement, das eine Brennkammer umgibt und seinerseits von einem Wärmedämmkörper umgeben ist, wobei der Wärmedämmkörper von einem Gehäuse umgeben ist, und mit einer Steuervorrichtung für die Steuerung des Brennzyklus und/oder Presszyklus des Dentalofens, **dadurch gekennzeichnet, dass** die Steuervorrichtung an eine Messschaltung (60) angeschlossen ist, durch die die sich in Abhängigkeit von der Feuchtigkeit im Wärmedämmkörper (22) ändernde Kapazität eines Kondensators (54) messbar ist, dessen Dielektrikum (58) mindestens teilweise von dem Wärmedämmkörper (22) gebildet ist.

2. Dentalofen, nach Anspruch 1, **dadurch gekennzeichnet, dass** durch die Steuervorrichtung beim Aufheizen des Dentalofens (10) eine Verlangsamung der Aufheizung und/oder eine Absenkung der Temperatur der durch das Heizelement (30) abgegebenen Heizleistung erfassbar, und aus deren Größe dieTemperatur in dem Dentalofen (10) bestimmbar ist.

3. Dentalofen nach einem der Ansprüche 1 oder 2, **dadurch gekennzeichnet, dass** der Dentalofen (10) einen Temperatursensor (32) aufweist, der sich mindestens teilweise durch den Wärmedämmkörper (22) erstreckt und in der Brennkammer (24) endet.

4. Dentalofen nach einem der vorhergehenden Ansprüche, **dadurch gekennzeichnet, dass** das Heizelement (30) als eine Elektrode (50, 52) des Kondensators (54) verschaltet ist.

5. Dentalofen nach einem der vorhergehenden Ansprüche, **dadurch gekennzeichnet, dass** das Gehäuse (26) oder ein Temperatursensor (32) als eine andere Elektrode (50, 52) des Kondensators (54) verschaltet ist.

6. Dentalofen nach einem der vorhergehenden Ansprüche, **dadurch gekennzeichnet, dass** das Heizelement (30) an einem Umschalter (74) angeschlossen ist, über welchem es zwischen der Messschaltung (60) und damit seiner Funktion als eine Elektrode (50, 52) des Kondensators (54) und einer Leistungsquelle für die Bereitstellung der Heizschaltung umschaltbar, ist.

7. Dentalofen nach einem der vorhergehenden Ansprüche, **dadurch gekennzeichnet, dass** durch eine Zunahme der Dielektrizitätskonstante des Kondensators (54) auf einen Wert, der mindestens einem ersten vorgegebenen Schwellwert entspricht, ein Signal für die Steuervorrichtung auslösbar ist.

8. Dentalofen nach einem der vorhergehenden Ansprüche, **dadurch gekennzeichnet, dass** bei Erreichen eines einer erhöhten Kapazität und dementsprechend einer erhöhten Dielektrizitätskonstante des Wärmedämmkörper (22) entsprechenden Schwellwert durch die Steuervorrichtung ein Entfeuchtungsprogramm startbar ist, durch das, insbesondere über eine Einschaltung des Heizelements (30) durch das Dentalrestaurationsteil (18) und/oder das Absaugen der Restfeuchte durch Unterdruck aus dem Dentalofen (10), die Feuchtigkeit in dem Wärmedämmkörper (22) reduzierbar ist.

9. Dentalofen nach einem der vorhergehenden Ansprüche, **dadurch gekennzeichnet, dass** die Messschaltung (60) mindestens eine Wechselspannungsquelle (72) aufweist, deren Ausgangsanschluss direkt oder indirekt, also über mindestens einen Widerstand (64), eine Spule (80) oder ein anderes elektrisches Bauelement, mit dem Kondensator (54) verbunden ist und dass die Messschaltung (60) die Wechselspannung und/oder Gleichspannung über dem Kondensator (54) oder der Wechselstrom und/oder Gleichstrom durch den Kondensator (54) als zu erfassende Messgröße für die Steuervorrichtung bereitstellt.

10. Dentalofen nach einem der vorhergehenden Ansprüche, **dadurch gekennzeichnet, dass** durch die Messschaltung (60) die Geschwindigkeit erfassbar ist, mit welcher die Ladung über die Elektroden (50, 52) des Kondensators (54) basierend auf einem vorgegebenen Lade- oder Entladestrom änderbar, und ihr Ausgangssignal der Steuervorrichtung übermittelbar ist.

11. Dentalofen nach einem der vorhergehenden Ansprüche, **dadurch gekennzeichnet, dass** der Kondensator (54) über die Messschaltung (60) als Teil eines Schwingkreises ausgebildet ist, wobei die Kapazität des Kondensators (54) über die Eigenfrequenz des Schwingkreises mitbestimmt.

12. Dentalofen nach einem der vorhergehenden Ansprüche, **dadurch gekennzeichnet, dass** der Dentalofen (10), insbesondere im Bereich des Gehäuses (26) mit einer Druckquelle (42), insbesondere einer Unterdruckquelle, verbunden ist, die verschließbar ist, und dass der Anschluss (40) im Bereich des Wärmedämmkörpers (22) endet.

13. Dentalofen, mit einem Heizelement, das eine Brennkammer umgibt und seinerseits von einem Wärmedämmkörper umgeben ist, wobei der Wärmedämmkörper von einem Gehäuse umgeben ist, und mit einer Steuervorrichtung für die Steuerung des Brennzyklus und/oder Presszyklus des Dentalofens, **dadurch gekennzeichnet, dass** der Wärmedämmkörper (22) ein Teil einer Messschaltung (60) ist, die an die Steuervorrichtung angeschlossen ist und dass durch die Messschaltung (60) der elektrische Widerstand (64) des Wärmedämmkörpers (22) in Abhängigkeit von der Feuchtigkeit im Wärme-dämmkörper (22) messbar ist.

14. Dentalofen, nach Anspruch 13, **dadurch gekennzeichnet, dass** eine Elektrode (50, 52) für die Messung des elektrischen Widerstands (64) des Wärmedämmkörper (22) das Heizelement (30) und/oder eine andere Elektrode (50, 52) das Gehäuse (26) des Dentalofens (10) ist.

15. Dentalofen nach einem der vorhergehenden Ansprüche, **dadurch gekennzeichnet, dass** die Steuervorrichtung einen externen unabhängig von der Steuerung des Brennzyklus und/oder Presszyklus des Dentalofens arbeitenden Teil aufweist, über welchen durch die Steuervorrichtung bei ausgeschaltetem Dentalofen die dielektrischen Werte des Wärmedämmkörpers (22) messbar und so die Feuchtigkeit in dem Wärmedämmkörper (22) bestimmbar ist.

16. Dentalofen nach einem der vorhergehenden Ansprüche, **dadurch gekennzeichnet, dass** zwei zusätzliche Elektroden (70, 72) in dem Wärmedämmkörper (22) eingebracht sind, die insbesondere verschieblich gelagert und/oder kraftschlüssig gehalten sind und zwischen denen und elektrisch leitfähigen Teilen des Ofens die kapazitiven Werte des umgebenden Wärmedämmkörpers (22) messbar sind.

17. Dentalofen nach einem der vorhergehenden Ansprüche, **dadurch gekennzeichnet, dass** ein elektrisch leitfähiges Element im Innenraum eines Ofens in Kombination mit einem weiteren elektrisch leitfähigen Element im Inneren des Ofens als Kondensator (54) hinsichtlich dessen Kapazität über eine Messschaltung (60) erfassbar ist, und dass insbesondere eine Serien- und/oder Parallelschaltung der bestehenden Kondensatoren in die Messchaltung einziehbar ist.

## Claims

1. A dental furnace, comprising a heating element which surrounds a firing chamber and which is in turn surrounded by a thermal Insulation element, the thermal insulation element being surrounded by a housing, and comprising a control device for controlling the firing cycle and/or press cycle of the dental furnace, **characterized in that** the control device is connected to a measuring circuit (60) by means of which the capacitance of a capacitor (54) which changes depending on the humidity in the thermal insulation element (22) can be measured, the dielectric (58) of the capacitor being at least partially formed by the thermal insulation element (22).

2. The dental furnace as claimed in claim 1, **characterized in that** during heating of the dental furnace (10) a deceleration of the heating and/or a decrease in the temperature of the heating output emitted by the heating element (30) can be detected by the control device, and that based on its size the temperature in the dental furnace (10) can be determined.

3. The dental furnace as claimed in one of the claims 1 or 2, **characterized in that** the dental furnace (10) comprises a temperature sensor (32) which extends at least partially through the thermal insulation element (22) and ends in the firing chamber (24).

4. The dental furnace as claimed in one of the previous claims, **characterized in that** the heating element (30) is interconnected as an electrode (50,52) of the capacitor (54).

5. The dental furnace as claimed in one of the previous claims, **characterized in that** the housing (26) or a temperature sensor (32) is interconnected as another electrode (50, 52) of the capacitor (54).

6. The dental furnace as claimed in one of the previous claims, **characterized in that** the heating element (30) is connected to a changeover switch (74) by means of which it can be switched over between the measuring circuit (60) and thus its function as an electrode (50, 52) of the capacitor (54) and a power source for providing the heating circuit.

7. The dental furnace as claimed in one of the previous claims, **characterized in that** by means of an increase in the dielectric constant of the capacitor (54) to a value which at least corresponds to a first predefined threshold value a signal for the control device can be triggered.

8. The dental furnace as claimed in one of the previous claims, **characterized in that** upon reaching a threshold value which corresponds to an increased capacitance and thus to an increased dielectric constant of the thermal insulation element (22) a dehumidification programme can be started by the control device which can reduce the humidity in the heat insulation element (22) in particular by turning on the heating element (30) by means of the dental restoration part (18) and/or by drawing off residual humidity with the help of negative pressure from the dental furnace (10).

9. The dental furnace as claimed in one of the previous claims, **characterized in that** the measuring circuit (60) comprises at least one AC voltage source (72) whose output port ist connected to the capacitor (54) directly or indirectly, that is to say by means of at least one resistor (64), a coil (80) or another electrical component, and **in that** the measuring circuit (60) provides the AC voltage and/or DC voltage across the capacitor (54) or the AC current and/or the DC current through the capacitor (54) as a measured parameter to be detected to the control device.

10. The dental furnace as claimed in one of the previous claims, **characterized in that** by means of the measuring circuit (60) the speed is detectable at which the charge can be changed by means of the electrodes (50, 52) of the capacitor (54) based on a predefined charging or discharging current and that its output signal can be transmitted to the control device.

11. The dental furnace as claimed in one of the previous claims, **characterized in that** the capacitor (54) is configured as part of an oscillator circuit by means of the measuring circuit (60), the capacitance of the capacitor (54) co-determining the natural frequency of the oscillator circuit.

12. The dental furnace as claimed in one of the previous claims, **characterized in that** the dental furnace (10), in particular in the region of the housing (26), is connected to a pressure source (42), in particular a negative pressure source, which is closable, and **in that** the connection (40) ends in the region of the thermal insulation element (22).

13. A dental furnace, comprising a heating element which surrounds a firing chamber and which is in turn surrounded by a thermal insulation element, the thermal insulation element being surrounded by a housing, and comprising a control device for controlling the
firing cycle and/or press cycle of the dental furnace, **characterized in that** the thermal insulation element (22) is part of a measuring circuit (60) which is connected to the control device, and **in that** by means of the measuring circuit (60) the electrical resistance (64) of the thermal insulation element (22) can be measured as a function of the humidity in the thermal insulation element (22).

14. The dental furnace as claimed in claim 13, **characterized in that** an electrode (50, 52) for measuring the electrical resistance (64) of the thermal insulation element (22) is the heating element (30) and/or **in that** another electrode (50, 52) is the housing (26) of the dental furnace (10).

15. The dental furnace as claimed In one of the previous claims, **characterized in that** the control device comprises an external component which acts independently of the control of the firing cycle and/or press cycle of the dental furnace, by means of which component with the help of the control device the dielectric values of the thermal insulation element (22) can be measured and thus the humidity in the thermal insulation element (22) can be determined when the dental furnace has been turned off.

16. The dental furnace as claimed in one of the previous claims, **characterized in that** two additional electrodes (70, 72) are fitted in the thermal insulation element (22) which are in particular slidably mounted and/or mounted non-positively and between which electrodes and electrically conductive parts of the furnace the capacitive values of the surrounding thermal insulation element (22) are measurable.

17. The dental furnace as claimed in one of the previous claims, **characterized in that** an electrically conductive element can be detected in the interior of a furnace in combination with a further electrically conductive element in the interior of the furnace as a capacitor (54) with regard to its capacitance by means of a measuring circuit (60), and **in that** in particular a series and/or parallel connection of the existing capacitors can be drawn into the measuring circuit.

## Revendications

1. Four dentaire, avec un élément chauffant, qui entoure une chambre de cuisson et qui est à son tour entouré par un corps d'isolation thermique, où le corps d'isolation thermique est entouré par un boîtier, et avec un dispositif de commande pour le contrôle du cycle de cuisson et/ou de pressage, **caractérise en ce que** le dispositif de commande est relié à un circuit de mesure (60), par lequel la capacité d'un condensateur (54) qui est variable en fonction de l'humidité dans le corps d'isolation thermique (22) est mesurable, dont le diélectrique (58) est formé au moins partiellement par le corps d'isolation thermique (22).

2. Four dentaire, selon la revendication 1, **caractérisé en ce que**, lors de l'échauffement du four dentaire (10), un ralentissement du chauffage et/ou une réduction de la température de la puissance thermique fournie par l'élément chauffant (30) peut être identifiée par le dispositif de commande et la température dans le four du dentaire (10) est déterminable par la taille de cette réduction.

3. Four dentaire, selon l'une des revendications 1 ou 2, **caractérisé en ce que** le four dentaire (10) présence un capteur de température (32) qui s'étend au moins partiellement à travers le corps d'isolation thermique (22) et se termine dans la chambre de cuisson (24).

4. Four-dentaire, selon l'une des revendications précédentes prétend, **caractérisé en ce que** l'élément chauffant (30) est connecté comme une électrode (50, 52) du condensateur (54).

5. Four dentaire, selon l'une des revendications précédentes, **caractérisé en ce que** le boîtier (26) ou un capteur de température (32) est connecté comme une autre électrode (50, 52) du condensateur (54).

6. Four dentaire, selon l'une des revendications, **caractérisé en ce que** l'élément chauffant (30) est relié à un interrupteur (74) par lequel il peut être commuté entre le circuit de mesure (60) et donc sa fonction comme électrode (50, 52) du condensateur (54) et une source d'alimentation pour le déploiement du circuit de chauffage.

7. Four dentaire selon l'une des revendications précédentes, **caractérisé en ce qu'**un signal pour le dispositif de commande est déclenchée par une augmentation de la constante diélectrique du condensateur (54) à une valeur qui correspond à au moins une première valeur seuil prédéterminée.

8. Four dentaire selon l'une des revendications précédentes, **caractérisé en ce que** lorsqu'une valeur seuil correspondant à une augmentation de la capacité, et par conséquent, à une constante diélectrique plus élevée du corps d'isolation thermique (22) est atteinte, un programme de déshumidification peut être démarré par le dispositif de commande, par lequel l'humidité dans le corps d'isolation thermique (22) peut être réduit, en particulier par une mise en marche de l'élément chauffant (30) par le biais de la pièce de restauration dentaire (18) et/ou l'aspiration de l'humidité résiduelle du four dentaire (10) par la création d'un vide.

9. Four dentaire selon l'une des revendications précédentes, **caractérisées en ce que** circuit de mesure (60) présente au moins une source de courant alternatif (72), dont la borne de sortie est reliée directement ou indirectement, donc par au moins une résistance (64), une bobine (80) ou un autre composant électrique, avec le condensateur (54) et que le circuit de mesure (60) fournit le courant alternatif et/ou le courant direct par le condensateur (54) ou fournit le courant alternatif et/ou le courant direct à travers le condensateur (54) comme valeur mesurable pour le dispositif de commande.

10. Four dentaire selon l'une des revendications précédentes, **caractérisé en ce que** la vitesse est détectable par le circuit de mesure (60) avec laquelle la charge sur les électrodes (50, 52) du condensateur (54) basée sur un courant de charge ou de décharge variable, prédéterminé, et son signal de sortie est transmis vers le dispositif de commande.

11. Four dentaire selon l'une des revendications précédentes, **caractérisé en ce que** le condensateur (54) est formé comme élément d'un circuit résonnant par le circuit de mesure (60), où la capacité du condensateur (54) détermine par la fréquence propre du circuit résonnant.

12. Four dentaire selon l'une des revendications précédentes, **caractérisé en ce que** le four dentaire (10), notamment dans le domaine du boîtier (26) est connecté a une source de pression (42), en particulier une source de pression négative, qui peut être fermée, et que la connexion (40) se termine dans la zone du corps d'isolation thermique (22).

13. Four dentaire, avec un élément chauffant, qui entoure une chambre de cuisson et qui est à son tour entourée par un corps d'isolation thermique, où le corps d'isolation thermique est entouré par un boîtier, et avec un dispositif de commande pour le contrôle du cycle de cuisson et/ou de pressage, **caractérisé en ce que** le corps d'isolation thermique (22) constitue un élément du circuit de mesure (60) qui est connecté au dispositif de commande et qu'à travers le circuit de mesure (60) la résistance électrique (64) du corps d'isolation thermique (22) est mesurable en fonction de l'humidité dans le corps d'isolation thermique (22).

14. Four dentaire, selon la revendication 13, **caractérisé en ce qu'**une électrode (50, 52) pour la mesure de la résistance électrique (64) du corps d'isolation thermique (22) est l'élément chauffant (30) et/ou une autre électrode (50, 52) est le boîtier (26) du four dentaire (10).

15. Four dentaire selon l'une des revendications précédentes, **caractérisé en ce que** le dispositif de commande présente une pièce externe qui fonctionne indépendamment de la commande du cycle de cuisson et/ou de pressage par le biais de laquelle à travers le dispositif de commande avec le four éteint les valeurs diélectriques du corps d'isolation thermique (22) sont mesurables, et est donc l'humidité dans le corps d'isolation thermique (22) peut être identifié.

16. Four dentaire selon l'une des revendications précédentes, **caractérisé en ce que** deux électrodes supplémentaires (70, 72) sont insérés dans le corps d'isolation thermique (22), qui en particulier sont logés de manière coulissante et/ou sont maintenus solidement et entre ceux-ci et des parties électro-conductrices du four, les valeurs capacitives du corps d'isolation thermique (22) entourant sont mesurables.

17. Four dentaire selon l'une des revendications précédentes, **caractérisé en ce qu'**un élément conducteur à l'intérieur d'un four en combinaison avec un autre élément conducteur à l'intérieur du four peut être reconnu comme un condensateur (54) par un circuit de mesure (60) concernant sa capacité, et qu'en particulier un branchement en série ou en parallèle des condensateurs existants peut être introduit dans le circuit de mesure.
